# EUROPÄISCHE PATENTSCHRIFT

(11) **EP 0 457 863 B1**
(45) Veröffentlichungstag und Bekanntmachung des Hinweises auf die Patenterteilung: **26.04.1995**
(21) Anmeldenummer: 90916227.3
(22) Anmeldetag: 22.11.1990
(51) Int. Cl.: H04B 10/20

(54) **ÜBERTRAGUNGSEINRICHTUNG MIT EINER OPTISCHEN ÜBERTRAGUNGSSTRECKE**
TRANSMISSION DEVICE WITH AN OPTICAL TRANSMISSION PATH
DISPOSITIF DE TRANSMISSION AVEC PARCOURS DE TRANSMISSION OPTIQUE

(30) Priorität: 12.12.1989 CH 4460/89
(43) Veröffentlichungstag der Anmeldung: 27.11.1991
(73) Patentinhaber: ASCOM TECH AG, CH-3018 Bern (CH)
(72) Erfinder: VOGEL, Paul, CH-3612 Steffisburg (CH); MARTINSON, Thomas, CH-1700 Fribourg (CH)
(74) Vertreter: Schwerdtel, Eberhard, Dr.
(86) Internationale Anmeldenummer: CH9000269
(87) Internationale Veröffentlichungsnummer: WO9109476

(56) Entgegenhaltungen:
- EP-A- 0 094 866
- WO-A-84/01835
- US-A- 4 166 946

## Beschreibung

Die Erfindung betrifft eine Übertragungseinrichtung mit einer optischen Übertragungsstrecke entsprechend dem Oberbegriff von Anspruch 1. Die Erfindung betrifft weiter die Verwendung dieser Übertragungseinrichtung entsprechend dem zweiten unabhängigen Anspruch.

Übertragungseinrichtungen und diverse Arten der Informationsübertragung über Übertragungsstrecken sind allgemein bekannt. In neuerer Zeit werden aus verschiedenen Gründen optische Übertragungsstrecken zunehmend wichtig. Neben den optischen Punkt/Punkt-Verbindungen sind auch kompliziertere Netzstrukturen mit optischen Leitungen bekannt. So beschreibt z.B. B. Viklund in einem Artikel "Optical fibres in local area networks", Communications/Communications International. October 1985, Seite 19 ff. verschiedene Netzstrukturen mit Glasfaserkabeln für Verteilnetze und für Netze mit individuell aufbaubaren Verbindungen zwischen diversen Teilnehmern. Bei letzteren Netzen ist vor allem eine Ringstruktur günstig. Die Teilnehmerstellen einer optischen Übertragungsleitung der letztgenannten Art sind über optoelektrische Koppler an die jeweils verwendete Faser angeschlossen.

Auf der Basis von z.B. GaAs-Halbleitermaterial gibt es heute Bauelemente für optische Systeme, z.B. Koppler, Weichen und Modulatoren, die zur Lichtbeeinflussung elektrooptische Effekte ausnützen. Diese Elemente arbeiten bis zu Frequenzen im Gigahertz-Bereich (Gbit/s).

Zur Übermittlung von Information ist die Verwendung von adresscodierten Paketen allgemein bekannt. Solche Pakete weisen einen Kopfteil (header) und einen Infoteil auf, wobei der Kopfteil alle für das jeweilige Paket und die beteiligten Einrichtungen notwendigen Daten enthält, z.B. eine Zieladresse, Angaben über die Art des Paketes, Überwachungsbits usw. Der Infoteil steht für die zu übertragende Nutzinformation zur Verfügung.

Beim Empfang einer über eine optische Leitung ankommenden Information ist es unumgänglich, dass dabei wenigstens ein Teil des die Information tragenden Lichtstromes verbraucht wird. Wird der Lichtstrom auf der Übertragungsstrecke nicht auf irgendeine Weise regeneriert, dann reduziert er sich bei seriell hintereinander geschalteten Empfangsknoten stufenweise.

Die Anschluss- bzw. Zugriffsknoten solcher Übertragungseinrichtungen weisen im allgemeinen elektrische Regeneratoren auf. Diese bedingen jeweils optoelektrische und elektrooptische Wandler, so dass insgesamt eher von einer gemischt optischen und elektrischen Einrichtung gesprochen werden muss.

Die Aufgabe der Erfindung besteht nun darin, unter Ausnützung der genannten Bauelemente eine Übertragungseinrichtung anzugeben, die weitgehend ohne elektrische Regeneratoren auskommt. Auf diese Weise soll ein System geschaffen werden, dass in einem viel wörtlicheren Sinn als bisher als "optisch" zu bezeichnen ist.

Die Lösung dieser Aufgabe wird durch den kennzeichnenden Teil der unabhängigen Ansprüche gegeben. Die abhängigen Ansprüche geben Ausgestaltungen der Erfindung an.

Mit der erfindungsgemässen Lösung ergibt sich die Möglichkeit, flexible Übertragungseinrichtungen anzugeben, die wegen ihres weitergehenden optischen Aufbaus gegenüber den vergleichbaren, bisher bekannten Einrichtungen erhebliche Vorteile bringen. Insbesondere sind zu erwähnen eine hervorragende Immunität gegen elektromagnetische Interferenzen, verminderte Jitter-Probleme und ebenfalls verminderte Störquellen, durch die Bitfehler entstehen.

Zudem sind die Übertragungseinrichtungen weitgehend gegen den Ausfall einzelner Teilnehmerknoten geschützt.

Im folgenden wird die Erfindung anhand von acht Figuren beispielsweise näher beschrieben. Es zeigen:
Fig. 1 - schematische Darstellung einer optischen Übertragungseinrichtung
Fig. 2 - schematische Darstellung eines optischen Richtungskopplers, sehr stark vergrössert
Fig. 3 - Symboldarstellung des Richtungskopplers
Fig. 4 - schematische Darstellung einer Folge von Paketen
Fig. 5 - Blockschaltbild eines Teilnehmerknotens
Fig. 6 - Schema für die Aufteilung von Lichtströmen
Fig. 7 - Diagramm der Abhängigkeit der Lichtleistung von der Anzahl Teilnehmerknoten
Fig. 8 - Blockschaltbild eines weiteren Teilnehmerknotens.

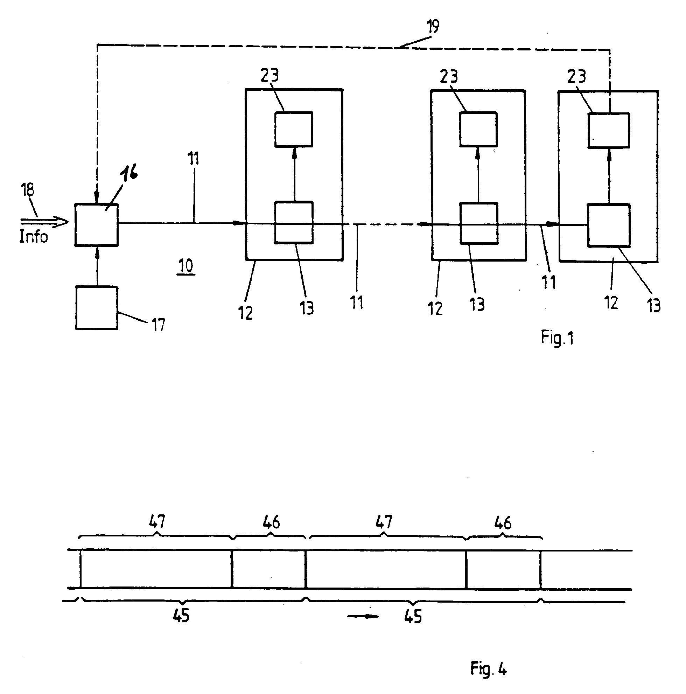

Fig. 1 zeigt schematisch eine Übertragungseinrichtung 10, auf der Information in Form adressierter Pakete in Pfeilrichtung übertragen wird. Als Übertragungsmedium dient eine optische Faser 11, insbesondere eine Monomodefaser. In diese Faser 11 ist seriell eine Mehrzahl von Teilnehmerknoten 12 eingefügt, wodurch die Faser 11 zwar in Abschnitte unterteilt wird, der Lichtstrom insgesamt jedoch nicht unterbrochen wird. Jedem Teilnehmerknoten 12 ist eine Adresse zugeordnet, durch die er von allen jeweils anderen Knoten unterschieden ist. Es ist jedoch auch möglich, dass mehreren Knoten 12 eine gleiche Adresse zugeordnet ist.

Der Lichtfluss beginnt bei einer Sendeeinheit 16, insbesondere einem Halbleiterlaser, der einen im wesentlichen konstanten Gleichlichtstrom in den Anfang der Faser 11 einspeist und einem nachgeordneten Modulator zum Modulieren dieses Gleichlichtstromes. Der modulierte Lichtstrom durchläuft die Faser 11 und passiert dabei unterbruchlos sämtliche Teilnehmerknoten 12. Diese Knoten weisen Zugriffseinheiten 13 auf, die wie beschrieben den Lichtstrom nicht unterbrechen. Die Teilnehmerknoten 12 sind weiter so ausgebildet, dass sie im Lichtstrom enthaltene, an sie adressierte Pakete empfangen können. Den Zugriffseinheiten 13 sind zu diesem Zweck elektronische Empfänger 23 nachgeschaltet, die die in den Paketen enthaltene Nutzinformation geeignet aufbereiten. Die Modulation kann beispielsweise so gewählt sein, dass vorhandenes Licht bzw. hohe Lichtleistung bzw. hohe Lichtintensität bzw. hell den Zustand logisch 1 und nichtvorhandenes Licht bzw. niedrige Lichtleistung bzw. niedrige Lichtintensität bzw.dunkel den Zustand logisch 0 darstellt.

Die Pakete entstehen in der Sendeeinheit 16, indem deren Modulator durch eine Takterzeugungseinheit 17 und in Abhängigkeit von der als Balkenpfeil 18 angedeuteten, zu übertragenden Nutzinformation gesteuert wird.

Die optische Faser 11 kann kreisförmig verlegt und der Empfänger 23 des letzten Teilnehmerknotens 12 durch eine kurze elektrische Verbindung 19 mit der Sendeeinheit 16 verbunden sein. Hierdurch entsteht eine Ringanordnung, bei der die Sendeeinheit 16 die einzige Lichtquelle enthält.

Der Empfänger 23 des letzten Teilnehmerknotens 12 kann aber auch elektrisch mit der Sendeeinheit 16 einer weiteren Übertragungseinrichtung 10 verbunden sein, wodurch eine Verdoppelung der linearen Ausdehnung erreicht wird. Bei einer solchen Einrichtung wechseln dann aktive, mit einem Lichtsender ausgerüstete Sendeeinheiten 16 und passive, keinen Lichtsender enthaltende Knoten 12 einander ab.

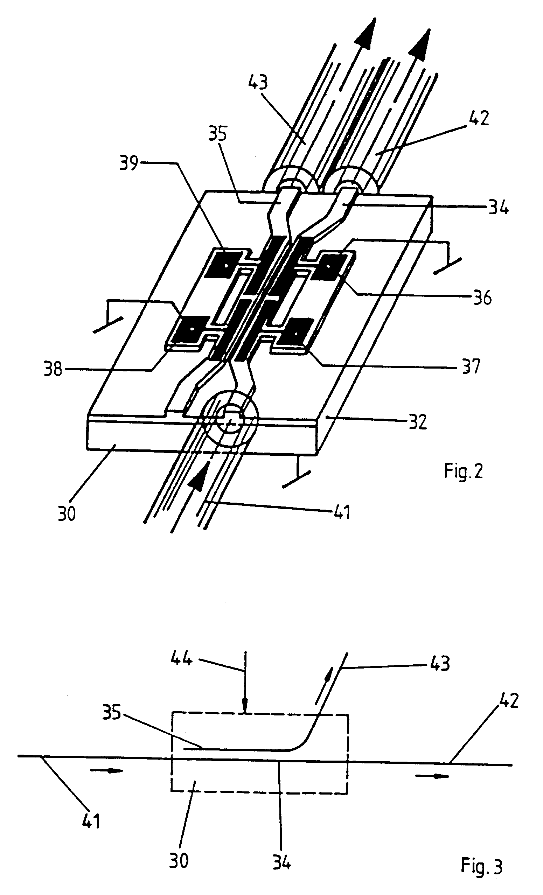

Fig. 2 zeigt in schematischer, stark vergrösserter Darstellung einen integrierten optischen Richtungskoppler 30 als Herzstück der genannten Zugriffseinheiten 13. Der Richtungskoppler 30 weist auf einem Halbleitersubstrat 32 z.B. einem InP-Substrat zwei benachbarte, optische Rippenwellenleiter 34, 35 auf, die von insgesamt vier metallischen Steuerelektroden 36 bis 39 bedeckt sind, über die elektrische Steuerspannungen anlegbar sind. Der Richtungskoppler ist auf seiner Eingangsseite mit dem einen Rippenwellerleiter 34 an eine ankommende Faser, insbesondere eine Monomodefaser 41 angeschlossen. Auf seiner Ausgangsseite ist er mit beiden Rippenwellenleitern 34, 35 an je eine abgehende Faser 42 bzw. 43 angeschlossen.

Der beschriebene, beispielsweise Richtungskoppler 30 arbeitet als Lichtweiche, wobei in Abhängigkeit von den an die Steuerelektroden 36 bis 39 angelegten Spannungen der über die Faser 41 ankommende Lichtstrom in beliebigem Verhältnis auf die beiden abgehenden Fasern 42, 43 aufteilbar ist. Fig. 3 zeigt eine Symbol-Darstellung des Richtungskopplers 30, die die Weichenfunktion zum Ausdruck bringen soll. Der Pfeil 44 symbolisiert dabei die elektrische Ansteuermöglichkeit, die über die Steuerelektroden 36 bis 39 (Fig. 2) gegeben ist.

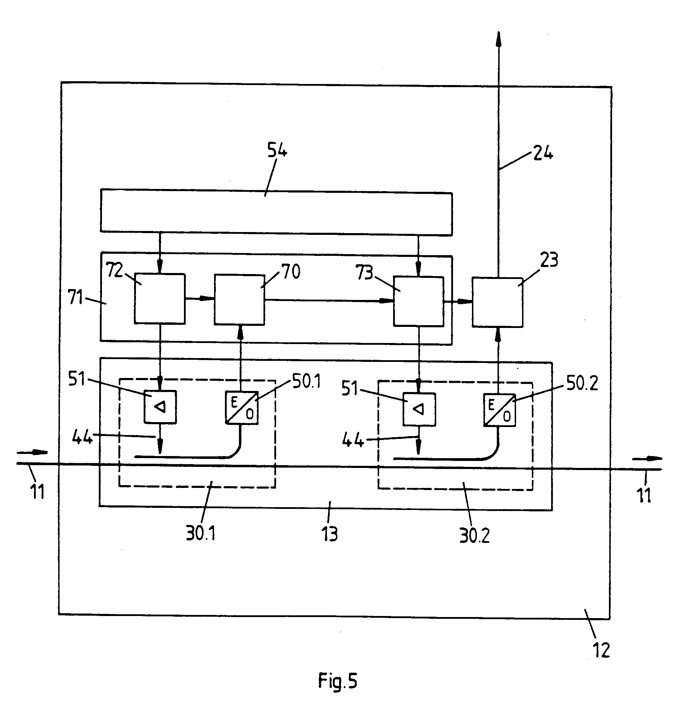

Fig. 4 zeigt schematisch eine Folge von digitalen, adresscodierten Paketen 45, die seriell in Pfeilrichtung über die optische Faser 11 (Fig. 1) laufen. Diese Pakete werden durch Intensitätsmodulation des Lichtes in der Sendeeinheit 16 gebildet und bestehen je aus einem Kopfteil 46 und einem Infoteil 47. Enthält der Infoteil keine Information, ist der Infoteil 47 also leer, so handelt es sich um ein Leerpaket, ansonsten um ein Informationspaket. Die Pakete 45 folgen sich unterbruchslos und in beliebiger Reihenfolge und bestehen aus einer erheblichen, jeweils gleichen Anzahl vom Bits, z.B. aus 1000 Bits. Die Pakete 45 sind damit alle gleich lang und so gebildet, dass sich jeder Teilnehmerknoten 12 selbständig auf den Bittakt BT und auf den Pakettakt PT der Pakete 45 synchronisieren kann. Im Kopfteil 46 ist vor allem eine Zieladresse enthalten, die angibt, für welchen Teilnehmerknoten 12 die im Infoteil des jeweiligen Paketes 45 enthaltene Nutzinformation bestimmt ist. Im Kopfteil sind weiter Daten angeordnet, die die für die Steuerung des empfangenden Teilnehmerknotens 12 und/oder für die Abwicklung der notwendigen Zugriffsprotokolle und für das Leiten der Pakete 45 Bedeutung haben. Schliesslich sind im Kopfteil dann auch noch Bereiche vorgesehen, die der Paketerkennung und der Synchronisierung dienen. Hierauf wird hier jedoch nicht näher eingegangen.

Nach Fig. 4 folgt dem Kopfteil 46 jedes Paketes 45 jeweils unmittelbar der jeweils zugeordnete Infoteil 47. Dies ist jedoch nicht zwingend. So kann zwischen Kopfteil 46 und Infoteil 47 jeweils eine Zwischenzone liegen, die anderen, sonstigen Zwecken dient. Weiter kann z.B. der Kopfteil 46 in zwei oder mehr Unterteile aufgeteilt sein, die den Infoteil 47 unterteilen oder die sich auf den Anfang und das Ende der Pakete 45 verteilen.

Die Pakete 45 durchlaufen wie beschrieben nacheinander alle Teilnehmerknoten 12. Der die Information tragende Lichtstrom bzw. die Lichtintensität bzw. die Lichtleistung der Pakete schwächt sich hierbei ab, zum einen durch die Verluste in den optischen Fasern 11 und zum anderen durch Abzweigverluste in den Zugriffseinheiten 13, über die nachfolgend noch eingehend gesprochen wird.

Im Kopfteil 46 jedes Pakets 45 ist wie gesagt eine jeweils zugeordnete Empfänger- oder Zieladresse enthalten. Jeder Teilnehmerknoten 12 liest daher die Kopfteile 46 aller über die Faser 11 ankommenden Pakete 45 bzw. die in diesen enthaltene Adressinformation. Hierzu zweigt jeder Knoten 12 jeweils für die Dauer eines Kopfteils 46 einen möglichst geringen, jedoch bezüglich seiner Intensität ausreichenden Teil der Gesamtlichtleistung des Kopfteils 46 ab und liest die darin enthaltene Adresse. Zeigt die Adresse an, dass das jeweilige Paket nicht für den jeweiligen Teilnehmerknoten 12 bestimmt ist, so wird der zugeordnete, anschliessende Infoteil 47 mit seiner vollständigen oder wenigstens annähernd vollständigen Lichtleistung, also ungehindert auf dem den jeweiligen Knoten durchquerenden Transitpfad belassen. Zeigt die Adresse dagegen an, dass die Nutzinformation des jeweiligen Paketes 45 für den jeweiligen Teilnehmerknoten 12 bestimmt ist, dann wird der zugehörige Infoteil 47 bzw. das die Nutzinformation tragende Licht in Richtung Empfänger 23 gesteuert.

Fig. 5 zeigt ein erstes Blockschaltbild eines Teilnehmerknotens 12 zur Ausführung der beschriebenen Methode. In die optische Faser 11 eingefügt ist die beschriebene Zugriffseinheit 13 mit zwei Richtungskopplern 30.1, 30.2 der beschriebenen Art, jeweils einem nachgeschalteten optoelektrischen Wandler 50.1, 50.2 und je einem Steuerverstärker 51, der die genannten Steuerelektroden 36-39 (Fig. 2) bzw. 44 (Fig. 3) der Richtungskoppler treibt. Beide Richtungskoppler 30.1, 30.2 sind durch eine Steuerung 71 in jeweils zwei verschiedene Schaltstellungen schaltbar. Bei der einen dieser Schaltstellungen verbleibt alles Licht auf der Faser 11 bzw. den durchgehenden Wellenleitern der Koppler, bei der anderen der Schaltstellungen wird jeweils ein noch zu beschreibender Anteil des ankommenden Lichtes abgezweigt und den optoelektrischen Wandlern 50.1 bzw. 50.2 zugeleitet.

Dem Wandler 50.2 nachgeschaltet ist ein Empfänger 23 für die Nutzinformation jeweils eines Pakets 45. Diese Information wird über den Ausgang 24 laufend an nicht gezeigte Weiterverarbeitungseinheiten weitergegeben.

Dem anderen Wandler 50.1 nachgeschaltet ist eine Adressenerkennungs-Einheit 70. Diese ist Bestandteil einer Steuerung 71, die weiter einen ersten 72 und einen zweiten Schaltgeber 73 umfasst. Die Steuerung 71 arbeitet in Abhängigkeit von einer Synchronisierungseinheit 54, die selbständig und phasenrichtig auf den Bittakt BT und den Pakettakt PT auf der optischen Faser 11 am jeweiligen Teilnehmerknoten 12 synchronisiert ist. Wie diese Synchronisierung aus vom Kopfteil 46 der Pakete 45 abgezweigter Information erreicht wird, ist hier belanglos und bildet den Gegenstand einer anderen Patentanmeldung.

Der Teilnehmerknoten 12 nach Fig. 5 arbeitet wie folgt: Auf der optischen Faser 11 erreichen ununterbrochen Pakete 45 den Knoten 12, durchlaufen diesen und verlassen ihn jeweils in Pfeilrichtung. Die Faser 11 bildet damit zusammen mit den Richtungskopplern 30 einen Transitpfad durch diesen jeweiligen Knoten 12. Die Synchronisierungseinheit 54 ist auf den Bit- BT und den Pakettakt PT der durchlaufenden Pakete 45 synchronisiert. Sie signalisiert dem ersten Schaltgeber 72 jeweils den Beginn eines Pakets 45 und dem zweiten Schaltgeber 73 das Ende eines Pakets, welche Ereignisse wegen der genannten einheitlichen Länge der Pakete 45 jeweils zeitlich zusammenfallen und periodisch auftreten. Die beiden Richtungskoppler 30.1, 30.2 können anfangs z.B. beide in einer Anfangsschaltstellung stehen. Diese Anfangsschaltstellung ist die genannte erste Schaltstellung der beiden Richtungskoppler und zeichnet sich dadurch aus, dass die gesamte über die optische Faser 11 ankommende Lichtleistung praktisch unvermindert auf der Faser 11 verbleibt. In dieser Anfangsschaltstellung durchläuft das Licht somit den jeweiligen Teilnehmerknoten 12 ungedämpft bzw. praktisch verlustfrei. Diese Schaltstellung der Zugriffseinheit 13 wird im folgenden als dritte Schaltstellung c bezeichnet.

Die Schaltstellung c bildet eine Sonderstellung, die für den normalen Betrieb der Übertragungseinrichtung 10 keine Bedeutung besitzt. Sie ist jedoch sehr wichtig, wenn ein Teilnehmerknoten 12 aus beliebigem Grund stillgelegt werden soll oder wenn der elektronische Teil eines Knotens 12 ausfällt. In diesen Fällen wird der Lichtstrom durch den jeweiligen Knoten 12 nicht unterbrochen oder sonstwie beeinflusst, so dass die jeweils anderen Knoten 12 und die optische Übertragungsstrecke völlig unbeeinflusst weiterarbeiten können. Die Schaltstellung c wird dadurch eingestellt, dass an den Elektroden 36-39 der beiden Richtungskoppler 30.1, 30.2 keine Spannung anliegt bzw. dass die Zugriffseinheit 13 von der Steuerung 71 keine Steuerspannung erhält.

Der erste Schaltgeber 72 schaltet nun bei normalem Betrieb die Adressenerkennungs-Einheit 70 jeweils für die Dauer des Kopfteils 46 jedes Paketes 45 aktiv. Gleichzeitig schaltet er für die gleiche Zeit über den einen Steuerverstärker 51 den ersten Richtungskopper 30.1 in dessen genannte andere Schaltstellung. Diese andere Schaltstellung ist dadurch gekennzeichnet, dass dabei ein relativ geringer Teil der auf der Faser 11 vorhandenen Lichtleistung zum zugeordneten optoelektrischen Wandler 50.1 abgezweigt wird, während der Rest der Lichtleistung über den zweiten Richtungskoppler 30.2 zur abgehenden Faser 11 weiterläuft. Die abgezweigte Lichtleistung iₐ soll dabei wegen des durch sie bewirkten Lichtverlustes auf der Faser 11 möglichst gering sein. Andererseits muss die abgezweigte Lichtleistung so gross sein, dass die Adressenerkennungs-Einheit 70 die im abgezweigten Licht enthaltene Zieladresse des jeweiligen Paketes 45 sowie eventuell weitere notwendige Informationen fehlerfrei lesen kann. Diese Schaltstellung der Zugriffseinheit 13 wird als erste Schaltstellung a bezeichnet.

Sobald die Adressenerkennungs-Einheit 70 eine Zieladresse entdeckt, die mit der dem jeweiligen Knoten 12 zugeordneten Adresse übereinstimmt, spricht sie unmittelbar an und schaltet über den zweiten Schaltgeber 73 (und den zugeordneten Steuerverstärker 51) den zweiten Richtungskoppler 30.2 in dessen andere Schaltstellung und den ersten Richtungskoppler 30.1 zurück in dessen erste Schaltstellung. Hierdurch wird anschliessend ein wesentlicher Teil der Lichtleistung oder eventuell die gesamte vorhandene Lichtleistung iₙ von der Faser 11 zum zugeordneten Wandler 50.2 geleitet. Die hiermit beschriebene letzte Schaltstellung der Zugriffseinheit 13 wird als zweite Schaltstellung b bezeichnet. Der Wandler 50.2 liest in dieser Schaltstellung b die Nutzinformation des Infoteils 47 des jeweiligen Paketes 45 und gibt diese Nutzinformation über seinen Ausgang 24 weiter. Gleichzeitig mit dem Ende des jeweiligen Pakets 45 schaltet die Synchronisierungseinheit 54 den zweiten Richtungskoppler 30.2 zurück in dessen Anfangsschaltstellung, so dass der Kopfteil 46 des nächsten Paketes 45 ungehindert auf die Faser 11 in Abgangsrichtung gelangen kann. Gleichzeitig wird der erste Richtungskoppler 30.1 wieder in dessen andere Schaltstellung geschaltet, wodurch die Adresse des nächsten Paketes 45 lesbar wird.

Alternativ zum Beschriebenen kann der erste Richtungskoppler 30.1 durch den ersten Schaltgeber 72 generell und fix in seine genannte andere Schaltstellung geschaltet werden, so dass dauernd eine für das Lesen der Adressen ausreichende Lichtleistung vom Transitpfad abgezweigt wird. In diesem Fall ist die Steuerung 71 bezüglich des ersten Schaltgebers 72 wesentlich einfacher aufbaubar. Als Gegenleistung musst dagegen ein ständiger Lichtverlust durch den ersten Richtungskoppler 30.1 in Kauf genommen werden.

Die durch den ersten Richtungskoppler 30.1 von der optischen Faser 11 abgezweigte Lichtleistung iₐ ist in jedem Fall erheblich geringer als die durch den zweiten Richtungskoppler 30.2 abgezweigte Leistung iₙ. Dies ist von entscheidender Bedeutung für die vorliegende Erfindung.

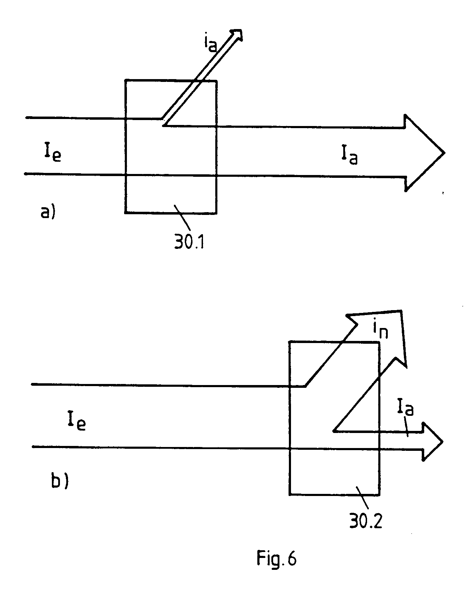

Fig. 6 verdeutlicht den beschriebenen Sachverhalt anhand eines kleinen Schemas. In der Darstellung (a) von Fig. 6 erreicht ein Lichtstrom der Eingangsleistung Iₑ den ersten Richtungskoppler 30.1. Durch dessen Arbeits-Schaltstellung (Schaltstellung a der Zugriffseinheit 13) wird diese Lichtleistung Iₑ aufgeteilt in einen abgezweigten Lichtstrom geringer Leistung iₐ (Adressenleseleistung) und einen starken Transitstrom der Ausgangsleistung Iₐ. Hierbei symbolisiert die Breite der Pfeile die jeweilige Leistung bzw. Intensität des Lichtes. In der Darstellung (b) erreicht der gleiche Eingangslichtstrom Iₑ den zweiten Richtungskoppler 30.2. Dieser steht nun in seiner Arbeits-Schaltstellung (Schaltstellung b der Zugriffseinheit 13) und zweigt dabei eine erhebliche Nutzinformation-Leistung iₙ ab. Auf dem Transitweg verbleibt dabei nur eine relativ geringe restliche Lichtleistung Iₐ.

Der Grund für die unterschiedliche, abgezweigte Lichtleistung ist folgender: der Infoteil 47 jedes Paketes 45 ist im allgemeinen nur für einen einzigen Teilnehmerknoten 12 bestimmt, und zwar für den durch die Zieladresse des Paketes bestimmten Knoten. Dieser Knoten kann daher im Grunde die gesamte Lichtleistung des genannten Infoteils 47 für sich beanspruchen, so dass auf dem Transitpfad bzw. der optischen Faser 11 nur der Zustand "dunkel" verbleibt. Ein dunkler Infoteil 47 zeigt somit an, dass das jeweilige Paket 45 verbraucht ist, d.h. von einem (in Übertragungsrichtung vorhergehenden) Knoten 12 gelesen wurde.

Die Empfindlichkeit des zweiten optoelektrischen Wandlers 50.2 (Fig. 5) für den Infoteil 47 ist so gross, dass bei der gegebenen Lichtleistung iₙ bei vertretbarer Fehlerwahrscheinlichkeit, z.B. 10⁻⁸, eine Bitrate der Nutzinformation bis in den Gigahertzbereich (Gbit/s) verwendbar ist. Dies bedeutet, anders ausgedrückt, eine grosse Bandbreite.

Anders verhält es sich beim Kopfteil 46 der Pakete 45. Hier muss jedem der Teilnehmerknoten 12 die Möglichkeit geboten werden, die jeweilige Zieladresse zu lesen, und zwar jeweils "fliegend" beim Vorbeilauf der Pakete 45. Für jeden Knoten 12 kann demnach nur ein Bruchteil derjenigen Lichtleistung zur Verfügung gestellt werden, der zum Lesen der Nutzinformation dient. Die relativ geringe Adressenleseleistung iₐ erfordert damit eine davon abhängige Reduzierung der verarbeitbaren Bandbreite. Dies bedeutet ein schmalbandigeres Leistungsdichtespektrum des Kopfteils 46 sowie angepasste Filter beim ersten optoelektrischen Wandler 50.1. Hierdurch ergibt sich eine wesentliche Empfindlichkeitssteigerung, die vor allem auf der Reduktion der Rauschbandbreite beruht. Die Empfindlichkeit kann weiter gesteigert werden durch geeignete Arten der Lichtmodulation sowie sonstige Massnahmen.

Insgesamt ist es günstig, wenn der Bittakt bzw. die Informationsrate im Kopfteil 46 der Pakete 45 erheblich tiefer liegt als die entsprechende Rate im Infoteil 47 bzw. die Nutzinformationsrate. Der Pegelunterschied zwischen der Adressenleseleistung iₐ und der Leistung iₙ zum Lesen der Nutzinformation kann z.B. mehr als 6 dB betragen.

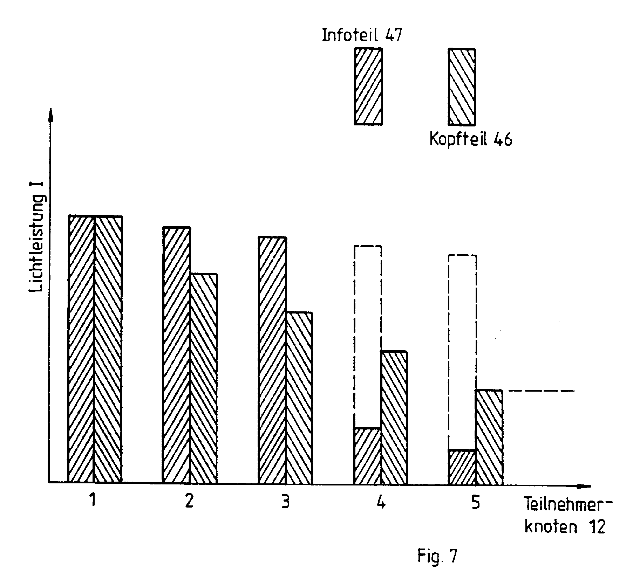

Fig. 7 zeigt in Form eines Balkendiagramms bei mehreren Teilnehmerknoten 12 die Abhängigkeit der auf der optischen Faser 11 am Ausgang jeweils eines weiteren Teilnehmerknotens 12 vorhandenen, restlichen Lichtleistung I. Der jeweils linke Balken gibt die Lichtleistung im Infoteil 47 der Pakete 45 an, der jeweils rechte Balken die Lichtleistung im zugeordneten Kopfteil 46.

Von Knoten 12 zu Knoten vermindert sich die Lichtleistung I durch die Dämpfung bzw. durch die Verluste im jeweiligen Abschnitt der Faser 11 zwischen den Knoten 12 und durch Streuung und Reflexion an Verbindungsstellen bzw. an Spleissen. Neben diesen relativ geringfügigen Verlusten tritt eine erhebliche Stufung der Lichtleistung des Kopfteils 46 auf durch das beschriebene Abzweigen der Adressenleseleistung iₐ in jedem Knoten 12. Der Infoteil 47 erleidet nur die erstgenannten Verluste. Sobald jedoch der Infoteil 47 gelesen wird (beispielsweise durch den vierten Knoten 12), verbleibt für diesen nur eine relativ geringe Restleistung.

Aus dem vorhergehenden folgt die Notwendigkeit, entweder die Empfindlichkeit der optoelektrischen Wandler 50.1 und 50.2 in Abhängigkeit vom Abstand des jeweiligen Teilnehmerknotens 12 von der Sendeeinheit 16 einzustellen, oder alternativ die jeweilige Steuerung 71 so zu beeinflussen, dass bei allen Knoten 12 jeweils absolut gesehen die gleichen Lichtleistungen iₐ und iₙ abgezweigt werden. In beiden Fällen kann dies durch eine einmalige Einstellung erfolgen oder bevorzugt (da flexibler) laufend aufgrund einer Regeleinrichtung.

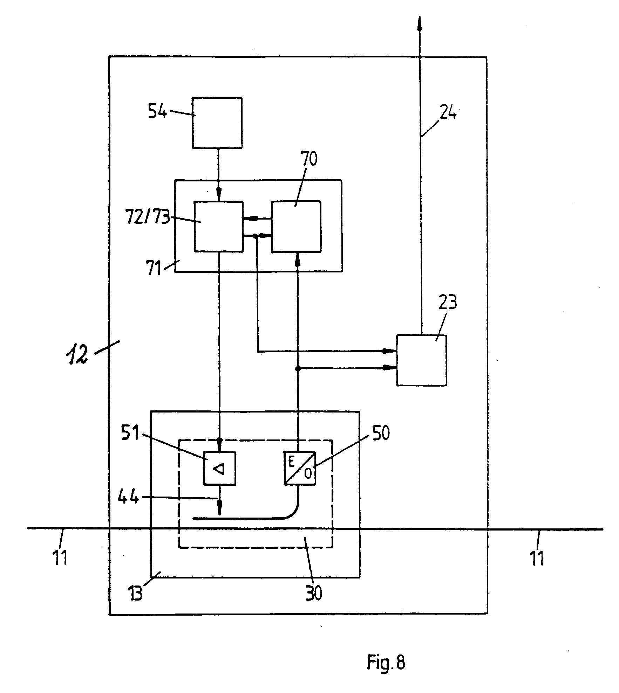

Die Übertragungseinrichtung 10 erlaubt eine erhebliche Zahl von Varianten. Fig. 8 zeigt als erstes eine Variante des Teilnehmerknotens 12 von Fig. 5. Der Knoten 12 von Fig. 8 bzw. dessen Zugriffseinheit 13 besitzt nur einen einzigen Richtungskoppler 30, der jedoch in drei Schaltzustände bringbar ist. Diese drei Schaltzustände bilden die genannte erste (a), die zweite (b) und die dritte (c) Schaltstellung der Zugriffseinheit 13 und dienen als Adressenlesestellung, als Nutzinformation-Lesestellung bzw. als Transitstellung. Die Steuerung 71 ist dabei so ausgebildet, dass der Richtungskoppler 30 in die genannten drei Stellungen a, b, c steuerbar ist. Die ausgekoppelte Lichtleistung iₐ oder iₙ wird dabei zugeordnet entweder der Adressenerkennungs-Einheit 70 und/oder dem Empfänger 23 zugeleitet.

Die optische Faser 11, z.B. eine Monomodefaser bildet nur eine Möglichkeit für die Ausbildung der Übertragungsstrecke. Allgemeiner handelt es sich bei der optischen Faser 11 um einen Wellenleiter zum Führen von Licht, der auch durch z.B. Rippenwellenleiter aus Halbleitermaterial realisierbar ist. Alternativ kommt z.B. auch eine freie, nicht fasergebundene Übertragungsstrecke in Art einer Richtfunkstrecke infrage. Hierbei können mehr oder weniger durchlässige Spiegel zum Auskoppeln der erforderlichen Adressenleseleistungen iₐ bzw. der Nutzinformationsleseleistung dienen.

Die Sendeeinheit 16 kann wie beschrieben eine Gleichlichtquelle enthalten, insbesondere einen Halbleiterlaser, dessen Licht anschliessend moduliert wird. Statt dessen kann der Halbleiterlaser direkt bezüglich seiner Sendeleistung moduliert sein. Weiter ist es möglich, in der Sendeeinheit 16 nur Leerpakete zu erzeugen, die durch eine, mehrere oder alle Teilnehmerknoten individuell mit Information beschrieben werden. Im letzten Fall und bei ringförmigem Aufbau der Übertragungseinrichtung kann jeder Teilnehmerknoten 12 mit jedem anderen Teilnehmerknoten sendend und empfangend kommunizieren.

Die Länge der Pakete 45 kann statt einheitlich und konstant auch variabel sein, sofern der Bit- BT und der Pakettakt PT kontrollierbar bleiben. So können beispielsweise zwei Paketsorten verwendet werden, deren Längen sich um den Faktor 2 unterscheiden und die sich beispielsweise ständig abwechseln. Weiter können Rahmen verwendet werden, die jeweils mehrere Pakete 45 zusammenfassen. Der Rahmentakt bildet dabei den Grundtakt, von dem sich unterschiedliche Paketdauern bzw. Pakettakte in gleichbleibender Folge ableiten.

Es ist weiter denkbar, dass Pakete 45 auch im sogenannten Start/Stopp-Betrieb auf die Übertragungsstrecke ausgesandt werden. Die Pakete treten dann in keinem erkennbaren Rhythmus auf und erfordern in ihrem Kopfteil spezielle Erkennungsmerkmale.

Der Aufbau der Richtungskoppler 30 kann bezüglich des Substrat-Materials, der Elektrodenanordnung, der Art der Rippenwellenleiter, der Kombination mit weiteren Kopplern 30, der Anschlüsse an die zu- und wegführenden Wellenleitern, z.B. der Faser 11 usw. beliebig sein. Es sind auch zukünftige, auf grundsätzlich anderen Gesetzen basierende Richtungskoppler verwendbar.

Die bis hierher beschriebene Übertragungseinrichtung 10 weist eine Übertragungsstrecke auf, die rein optisch und ohne aktive, die Strecke unterbrechende, elektronische Regeneratoren ausgebildet ist. Es gibt somit keine optoelektrische und/oder elektrooptische Einheiten, die den Lichtstrom gesamthaft unterbrechen oder gesamthaft sonstwie beeinflussen. Hierdurch entfallen alle Quellen für die Generierung von Jitter- und Phasierungsproblemen. Die Übertragungseinrichtung 10 ist damit rausch- und störungsarm.

Die Übertragungseinrichtung kann zur Verlängerung der überbrückbaren Strecke mit optischen Verstärkern ausgerüstet werden, die ohne Unterbrechung des jeweiligen Lichtstromes dessen Leistung erhöhen. Hierdurch lassen sich die beschriebenen Lichtverluste teilweise oder auch vollständig aufheben. Der Aufbau der Teilnehmerknoten 12 wird hierdurch nicht beeinflusst.

Die Übertragungseinrichtung 10 dient ausschliesslich zum übertragen und Empfangen von Paketen 45. Über die Art und Weise, wie die Teilnehmerknoten 12 auch Information aussenden können, wird hier keine Aussage gemacht.

## Patentansprüche

1. Übertragungseinrichtung (10)
mit einer optischen Übertragungsstrecke, an die eine Mehrzahl von Teilnehmerknoten (12) seriell angeschlossen ist, denen Adressen zugeordnet sind,
mit wenigstens einer Sendeeinheit (16), die laufend Pakete (45) auf die Übertragungsstrecke aussendet, welche Pakete (45) einen Kopfteil (46) mit einer Zieladresse und einen Infoteil (47) aufweisen,
mit einer Takterzeugungseinheit (17), die für die Übertragungsstrecke (45) wenigstens einen starren Bittakt (BT) festlegt,
in jedem Teilnehmerknoten (12) mit einer Synchronisierungseinheit (54), die wenigstens auf diesen Bittakt (BT) jeweils phasenrichtig eingestellt sind, mit einer Adressenerkennungs-Einheit (70) und mit einem Empfänger (23) für die im Infoteil (47) der Pakete (45) enthaltene Nutzinformation,
dadurch gekennzeichnet,
- dass die Übertragungsstrecke rein optisch ohne aktive, die Strecke unterbrechende Regeneratoren ausgebildet ist, und
- dass in jedem Teilnehmerknoten (12) eine Zugriffseinheit (13) und eine Steuerung (71) vorgesehen sind, welche Steuerung (71) mit dieser Zugriffseinheit (13), mit der Adressenerkennungs-Einheit (70) und mit dem Empfänger (23) verbunden ist,
derart,
dass die Zugriffseinheit (13) in die Üertragungsstrecke eingefügt ist, und in wenigstens eine erste (a) und in eine zweite Schaltstellung (b) schaltbar ist,
wobei die in der ersten Schaltstellung (a) von der Übertragungsstrecke abzweigbare Lichtleistung (iₐ) kleiner ist als die in der zweiten Schaltstellung (b) abzweigbare Lichtleistung (iₙ), und
wobei die in der ersten Schaltstellung (a) abgezweigte Lichtleistung (iₐ) wenigstens der Adressenerkennungs-Einheit (70) und die in der zweiten Schaltstellung (b) abgezweigte Lichtleistung (iₙ) dem Empfänger (23) zugeführt wird.

2. Übertragungseinrichtung nach Anspruch 1,
dadurch gekennzeichnet,
dass die in der ersten Schaltstellung (a) abgezweigte Lichtleistung (iₐ) erheblich kleiner ist als die in der zweiten Schaltstellung (b) abgezweigte Lichtleistung (iₙ).

3. Übertragungseinrichtung nach Anspruch 1,
dadurch gekennzeichnet,
dass die Übertragungsstrecke als Wellenleiter zum Führen von Licht ausgebildet ist.

4. Übertragungseinrichtung nach Anspruch 3,
dadurch gekennzeichnet,
dass eine Zugriffseinheit (13) wenigstens einen steuerbaren Richtungskoppler (30) aufweist, dessen Transitpfad Bestandteil des Wellenleiters ist und dessen Abzweig mit dem Empfänger (23) verbunden ist.

5. Übertragungseinrichtung nach Anspruch 4,
dadurch gekennzeichnet,
dass die Zugriffseinheit (13) einen einzigen steuerbaren Richtungskoppler (30) aufweist, und
dass der Abzweig des Richtungskopplers (30) auch mit der Adressenerkennungs-Einheit (70) verbunden ist.

6. Übertragungseinrichtung nach Anspruch 4,
dadurch gekennzeichnet,
dass die Zugriffseinheit (13) zwei steuerbare Richtungskoppler (30.1, 30.2) aufweist, die seriell Bestandteil des Wellenleiters sind,
dass der Abzweig des einen Richtungskopplers (30.1) mit der Adressenerkennungs-Einheit (70) und der Abzweig des anderen Richtungskopplers (30.2) mit dem Empfänger (23) verbunden ist.

7. Übertragungseinrichtung nach Anspruch 4,
dadurch gekennzeichnet,
dass die Zugriffseinheit (13) einen steuerbaren (30.2) und einen nichtsteuerbaren Richtungskoppler (30.1) aufweist, die seriell Bestandteil des Wellenleiters sind,
dass der Abzweig des nichtsteuerbaren Richtungskopplers (30.1) mit der Adressenerkennungs-Einheit (70) und der Abzweig des steuerbaren Richtungskopplers (30.2) mit dem Empfänger (23) verbunden ist.

8. Verfahren zum Betrieb einer Übertragungseinrichtung (10) entsprechend wenigstens einem der Ansprüche 1 bis 7,
dadurch gekennzeichnet,
dass jeder Teilnehmerknoten (12) für jedes vorbeilaufende Paket (45) über seine Steuerung (71) seine Zugriffseinheit (13) jeweils für die Dauer des Kopfteils (46) des Paketes (45) in deren (13) erste Schaltstellung (a) schaltet, dass während dieser ersten Schaltstellung (a) jeweils ermittelt wird, ob die Zieladresse des jeweiligen Pakets (45) mit der jeweiligen Adresse des jeweiligen Teilnehmerknotens (12) übereinstimmt,
dass, sofern dies der Fall ist, die Zugriffseinheit (13) für die Dauer des Infoteils (47) des jeweiligen Pakets (45) in die zweite Schaltstellung (b) schaltet, und
dass während dieser zweiten Schaltstellung (b) die im Infoteil (47) enthaltene Nutzinformation dem Empfänger (23) zugeführt wird.

9. Verfahren zum Betrieb nach Anspruch 8,
dadurch gekennzeichnet,
dass, sofern die Zieladresse des jeweiligen Pakets (45) nicht mit der jeweiligen Adresse des jeweiligen Teilnehmerknotens (12) übereinstimmt, die Zugriffseinheit (13) in ihrer ersten Schaltstellung (a) verharrt.

10. Verfahren zum Betrieb nach Anspruch 8,
dadurch gekennzeichnet,
dass, sofern die Zieladresse des jeweiligen Pakets (45) nicht mit der jeweiligen Adresse des jeweiligen Teilnehmerknotens (12) übereinstimmt, die Zugriffseinheit (13) in eine dritte Schaltstellung (c) geschaltet wird, in der die von der Übertragungsstrecke abgezweigte Lichtleistung (iₐ, iₙ) im wesentlichen Null ist.

11. Verfahren zum Stillegen wenigstens eines Teiles einer Übertragungseinrichtung (10) entsprechend wenigstens eines der Ansprüche 1 bis 7,
dadurch gekennzeichnet,
dass wenigstens ein Teilnehmerknoten (12) seine Zugriffseinheit (13) generell in eine dritte Schaltstellung (c) schaltet, in der die von der Übertragungsstrecke abgezweigte Lichtleistung (iₐ, iₙ) im wesentlichen Null ist.

12. Verfahren zum Stillegen nach Anspruch 11,
dadurch gekennzeichnet,
dass die dritte Schaltstellung (c) dadurch erreicht wird, dass die Zugriffseinheit (13) von der Steuerung (71) keine Steuerspannung erhält.

## Claims

1. Transmission device (10)
with an optical transmission path to which a plurality of user nodes (12) with assigned addresses is connected in series,
with at least one transmission unit (16) continuously transmitting packets (45) onto the transmission path, whereby said packets (45) have a header portion (46) with a target address and have an information portion (47),
with a clock generator (17) defining at least a fixed bit cycle (BT) for the transmission path,
with a synchronization unit (54) in each user node (12), whereby said synchronization units are adjusted in correct phase relation to at least said bit cycle (BT),
with an address identification unit (70), and with a receiver (23) for the information contained in said information portions (47) of the packets (45),
characterized by the fact
- that the transmission path is designed in a purely optical fashion without active regenerators interrupting the path, and
- that an access unit (13) and a control (71) are provided in each user node (12), where the control (71) is connected to this access unit (13), to the address identification unit (70), and to the receiver (23),
in such a way
that the access unit (13) is inserted into the transmission path, and may be switched into at least a first switching position (a) and a second switching position (b),
where the luminous intensity (ia) that may be branched off from the transmission path in the first switching position (a) is smaller than the luminous intensity (in) that may be branched off in the second switching position (b),
and where the luminous intensity (iₐ) branched off in the first switching position (a) at least is supplied to the address identification unit (70), and the luminous intensity (iₙ) branched off in the second switching position (b) is supplied to the receiver (23).

2. Transmission device according to Claim 1,
characterized by the fact
that the luminous intensity (iₐ) branched off in the first switching position (a) is substantially smaller than the luminous intensity (iₙ) branched off in the second switching position (b).

3. Transmission device according to Claim 1,
characterized by the fact
that the transmission path is constructed as a waveguide to conduct light.

4. Transmission device according to Claim 3,
characterized by the fact
that the access unit (13) is provided with at least one controllable directional coupler (30), the transit path of which is a component of the waveguide, and the branch connection of which is connected to the receiver (23).

5. Transmission device according to Claim 4,
characterized by the fact
that the access unit (13) is provided with one single controllable directional coupler (30), and
that the branch connection of the directional coupler (30) is also connected to the address identification unit (70).

6. Transmission device according to Claim 4,
characterized by the fact
that the access unit (13) is provided with two controllable directional couplers (30.1, 30.2), being serially parts of the transit path,
that the branch connection of the one directional coupler (30.1) is connected to the address identification unit (70) and the branch connection of the other directional coupler (30.2) is connected to the receiver (23).

7. Transmission device according to Claim 4,
characterized by the fact
that the access unit (13) is provided with a controllable (30.2) and with a noncontrollable directional coupler (30.1) being serially parts of the waveguide, and
that the branch connection of the noncontrollable directional coupler (30.1) is connected to the address identification unit (70), and the branch connection of the controllable directional coupler (30.2) is connected to the receiver (23).

8. Process for operating a transmission device (10) according to at least one of the Claims 1 through 7, characterized by the fact
that each user node (12) for each passing packet (45) and by its control (71) switches its access unit (13) each for the duration of the header portion (46) of the packets (45) into its (13) first switching position (a),
that during this first switching position (a) it is determined, if the target address of the respective packet (45) corresponds to the respective address of the respective user node (12),
that, if the previous instance actually occurs, the said user node (12) switches its access unit (13) for the duration of the information portion (47) of the respective packet (45) into the second switching position (b), and that during this second switching position (b) the user information contained in said information portion (47) is supplied to the receiver (23).

9. Process for operating according to Claim 8,
characterized by the fact
that, if the target address of the respective packet (45) does not correspond to the respective address of the respective user node (12), the access unit (13) remains in its first switching position (a).

10. Process for operating according to Claim 8,
characterized by the fact
that, if the target address of the respective packet (45) does not correspond to the respective address of the respective user node (12), the access unit (13) is switched into a third switching position (c) in which the luminous intensity (iₐ, iₙ) branched off from the transmission path essentially is zero.

11. Process for shutting down at least part of a transmission device (10) according to at least one of the Claims 1 through 7,
characterized by the fact
that at least one user node (12) switches its access unit (13) into a third switching position (c) in which the luminous intensity (iₐ,iₙ) branched off from the transmission path essentially is zero.

12. Process to shut down at least part of a transmission device according to Claim 11,
characterized by the fact
that the third switching position (c) is adjusted by the fact that the access unit (13) does not receive a control voltage from the control (71).

## Revendications

1. Dispositif de transmission (10) avec un trajet optique de transmission, auquel est raccordée en série une multiplicité de noeuds de correspondants (12) dont les sont associées adresses, avec au moins une unité émettrice (16) qui émet de façon continue des paquets (45) sur le trajet de transmission, lesquels paquets (45) présentent une tête (46) avec une adresse de destination et une partie d'informations (47), avec une unité de production de cycles (17) qui détermine pour le trajet de transmission au moins un rythme numérique rigide (BT), dans chaque noeud de correspondant (12) avec une unité de synchronisation (54), paquets qui sont réglés au moins sur ce rythme numérique (BT) respectivement en phase, avec une unité de détection d'adresse (70) et avec un récepteur (23) pour les informations utiles contenues dans la partie d'information (47) des paquets (45), dispositif de transmission (10) caractérisé en ce que le trajet de transmission est constitué de façon purement optique sans régénérateurs actifs interrompant le trajet, et en ce que dans chaque noeud de correspondant (12) sont prévues une unité d'accès (13) et une commande (71), laquelle commande (71) est reliée à cette unité d'accès (13), à l'unité de détection d'accès (70) et au récepteur (23) de telle sorte que l'unité d'accès (13) soit introduite dans le trajet de transmission et puisse être mise dans au moins une première position (a) et une seconde position (b) de branchement, la puissance lumineuse (iₐ) qui peut être dérivée du trajet de transmission étant plus petite que la puissance lumineuse (iₙ) qui peut être dérivée dans la deuxième position de branchement (b), et la puissance lumineuse dérivée dans la première position de branchement (a) étant amenée au moins à l'unité de détection d'adresse (70) tandis que la puissance lumineuse (iₙ) dérivée dans la deuxième position de branchement (b) est amenée au récepteur (23).

2. Dispositif de transmission selon la revendication 1, caractérisé en ce que la puissance lumineuse (iₐ) dérivée dans la caractérisé la première position de branchement (a) est considérablement plus petite que la puissance lumineuse (iₙ) dérivée dans la deuxième position de branchement (b).

3. Dispositif de transmission selon la revendication 1, caractérisé en ce que le trajet de transmission est constitué sous la forme d'un guide d'ondes servant à guider de la lumière.

4. Dispositif de transmission selon la revendication 3, caractérisé en ce qu'une unité d'accès (13) présente au moins un coupleur de direction (30) que l'on peut commander, dont l'itinéraire de transit est une partie composante du guide d'ondes et dont la dérivation est reliée au récepteur (23).

5. Dispositif de transmission selon la revendication 4, caractérisé en ce que l'unité d'accès (13) présente un coupleur de direction unique (30) qui peut être commandé, et en ce que la dérivation du coupleur de direction (30) est reliée aussi à l'unité de détection d'adresse (70).

6. Dispositif de transmission selon la revendication 4, caractérisé en ce que l'unité d'accès (13) présente deux coupleurs de direction (30.1, 30.2) qui peuvent être commandés et qui sont des composants en série du guide d'ondes, en ce que la dérivation de l'un des coupleurs de direction (30.1) est reliée à l'unité de détection d'adresses (70), et en ce que la dérivation de l'autre coupleur de direction (30.2) est reliée au récepteur (23).

7. Dispositif de transmission selon la revendication 4, caractérisé en ce que l'unité d'accès (13) présente un coupleur de direction (30.2) qui peut être commandé et un coupleur de direction (30.1) qui ne peut pas être commandé, ces coupleurs étant des parties composantes en série du guide d'ondes, en ce que la dérivation du coupleur de direction (30.1) qui ne peut pas être commandée est reliée à l'unité de détection d'adresse (70), et en ce que la dérivation du coupleur de direction (30.2) qui peut être commandée est reliée au récepteur (23).

8. Procédé pour faire fonctionner un dispositif de transmission (10) correspondant au moins à l'une des revendications 1 à 7, caractérisé en ce que chaque noeud de correspondant (12) branche pour chaque paquet (45) qui passe devant celui-ci, au moyen de sa commande (71), son unité d'accès (13) respectivement pour la durée de la partie de la tête (46) du paquet (45), dans la première position (a) de l'unité (13), en ce que pendant cette première position de branchement (a) on détecte respectivement si l'adresse de destination du paquet correspondant (45) coïncide avec l'adresse correspondante du noeud de correspondant (12) respectif, en ce que, pour autant que ce soit le cas, l'unité d'accès (13), se met pour la durée de la partie d'informations (47) du paquet correspondant (45), dans la deuxième position de branchement (b), et en ce que, pendant cette deuxième position de branchement (b), l'information utile contenue dans la partie d'informations (47) est amenée au récepteur (23).

9. Procédé pour le fonctionnement selon la revendication 8, caractérisé en ce que, dans la mesure où l'adresse de destination du paquet respectif (45) ne coïncide plus avec l'adresse correspondante du noeud respectif de correspondant (12), l'unité d'accès (13) reste dans sa première position de branchement (a).

10. Procédé pour le fonctionnement selon la revendication 8, caractérisé en ce que, dans la mesure où l'adresse de destination du paquet correspondant (45) ne coïncide plus avec l'adresse correspondante du noeud respectif de correspondant (12), l'unité d'accès (13) est mise dans une troisième position de branchement (c) dans laquelle la puissance lumineuse (iₐ, iₙ), dérivée du trajet de transmission, est sensiblement nulle.

11. Procédé pour mettre à l'arrêt au moins une partie d'un dispositif de transmission (10) correspondant à l'une au moins des revendications 1 à 7, caractérisé en ce qu'au moins un noeud de correspondant (12) met son unité d'accès (13) de façon générale dans une troisième position de branchement (c) dans laquelle la puissance lumineuse (iₐ, iₙ) dérivée du trajet de transmission, est sensiblement nulle.

12. Procédé pour mettre à l'arrêt selon la revendication 11, caractérisé en ce que la troisième position de branchement (c) est atteinte grâce au fait que l'unité d'accès (13) ne reçoit aucune tension de la commande (71).
